# EUROPÄISCHE PATENTANMELDUNG

(11) **EP 3 399 180 A1**
(43) Veröffentlichungstag der Anmeldung: **07.11.2018**
(21) Anmeldenummer: 17020189.1
(22) Anmeldetag: 03.05.2017
(51) Int. Cl.: F03D 1/04, F03D 3/04, F03D 9/34

(54) **WINDKOLLEKTOREN AN GEBÄUDEN**

(71) Anmelder: Kretschmer, Martin, 34317 Habichtswald (DE)
(72) Erfinder: Kretschmer, Martin, 34317 Habichtswald (DE)

(57) **Zusammenfassung**

Die Erfindung betrifft Kollektoren zum Zwecke der Bündelung von Windkraft und Luftströmungen an Gebäudeflächen (Windkollektor). Die gebündelte Windkraft kann dazu genutzt werden elektrische Energie mit Hilfe von bekannten Windrotoren und Generatoren zu erzeugen.
Die Erfindung ist im Besonderen dadurch gekennzeichnet, dass die Anordnung der Kollektoren an einer Gebäudefläche die auftreffenden Luftströmungen bündelt und an Bündelungspunkten konzentriert nutzbar macht.
Durch die Erfindung ergibt sich eine an örtliche Gegebenheiten angepasste effiziente Möglichkeit Windenergie an Gebäudeflächen zu nutzten. Nach derzeitigem Stand der Technik werden Windrotoren nur an bestehenden Gebäudekanten eingesetzt ohne die Anströmung der Luft über die Gebäudefläche zu optimieren, wodurch Effizienz-Verluste entstehen und große Rotorflächen benötigt werden. Es kann daher nur ein geringer Teil der Windkraft an einer Gebäudefläche mit relativ hohem Aufwand genutzt werden.

Einsatzbereiche:
▪ an beliebigen Gebäudefassaden
▪ an beliebigen Dachflächen
▪ an Masten, z. B. Strom- oder Sendemasten, Leuchttürme usw.
▪ an Brücken
▪ an Auf-Überbauten (z. B. Toll Collect Mautbrücken),
▪ an Werbe- und Plakatflächen, Solarmodulen und Verkehrsschildern, usw.

## Beschreibung

1 Technische Beschreibung................................................................................................................ 2
   1.1 Funktionsbeschreibung........................................................................................................... 6
2 Patentansprüche............................................................................................................................. 8
   2.1 Patent Hauptanspruch ...................................................... 8
   2.2 Patent Nebenansprüche.......................................................................................................... 9
3 Zeichnungen.................................................................................................................................. 10
   3.1 Zeichnungsbeschreibung....................................................................................................... 13
4 Zusammenfassung......................................................................................................................... 14
5 Erfinderbenennung ............................................................ 15

### 1 Technische Beschreibung

Die Erfindung betrifft Kollektoren zum Zwecke der Bündelung von Windkraft und Luftströmungen an Gebäudeflächen (Windkollektor). Die gebündelte Windkraft kann dazu genutzt werden elektrische Energie mit Hilfe von bekannten Windrotoren und Generatoren zu erzeugen.

Die Erfindung ist im Besonderen dadurch gekennzeichnet, dass die Anordnung der Kollektoren an einer Gebäudefläche die auftreffenden Luftströmungen bündelt und an Bündelungspunkten konzentriert nutzbar macht.

Durch die Erfindung ergibt sich eine an örtliche Gegebenheiten angepasste effiziente Möglichkeit Windenergie an Gebäudeflächen zu nutzten. Nach derzeitigem Stand der Technik werden Windrotoren nur an bestehenden Gebäudekanten eingesetzt ohne die Anströmung der Luft über die Gebäudefläche zu optimieren, wodurch Effizienz-Verluste entstehen und große Rotorflächen benötigt werden. Es kann daher nur ein geringer Teil der Windkraft an einer Gebäudefläche mit relativ hohem Aufwand genutzt werden.

Einsatzbereiche:
▪ an beliebigen Gebäudefassaden
▪ an beliebigen Dachflächen
▪ an Masten, z. B. Strom- oder Sendemasten, Leuchttürme usw.
▪ an Brücken
▪ an Auf-Überbauten (z. B. Toll Collect Mautbrücken),
▪ an Werbe- und Plakatflächen, Solarmodulen und Verkehrsschildern, usw.

Vorteile gegenüber den bekannten Windrädern in Form von Turm-Rotorflügler und Walzenrotor zur Gewinnung von Windenergie im Feld und an Gebäuden:
- Optisch sehr gute und problemlose Anpassung an Hausdächer, Gebäudeflächen entsprechend örtlicher Gegebenheiten und persönlicher Vorlieben (Segel, Platten, Ziegelaufsatz);
- Wesentlich höhere Standortmöglichkeiten, damit verbunden hohe Verbreitung mit effizienter Nutzung der Windenergie;
- Sehr niedrige Geräuschpegel, dadurch geringe bis keine Lärmbelästigung; Eine GeräuschDämmung des Rotoren Bereichs wird möglich.
- Keine Gefährdung der Vogelwelt und des Flugverkehrs;
- Bündelung der Luftströme bei niedrigen Windgeschwindigkeiten, daher auch für Schwach-Windgebiete geeignet;
- Kein Mess- und Steueraufwand für die optimale Windstellung;
- Kombinierbarkeit der Anlage mit Modernisierungsmaßnahmen wie Gebäude Dämmung, Fassadenerneuerung, Dacheindeckung und Solarmodulen.

Eine Massenproduktion und Vertrieb im Handel kann schnell durch eine Vergabe von Lizenzrechten an Hersteller von Dachziegeln, Fassadenverkleidungen, Solarmodulen und Fassadendämmungen erreicht werden.

Die Kollektoren-Platten und Kollektor-Ziegelaufsätze können modulartig aneinander gereiht verbaut werden. Eine Investition für einen Grundaufbau ist daher überschaubar und kann mit geplanten Dacherneuerungen und Fassadenerneuerungen kombiniert werden. Auch eine Kombination mit geplanten Fassadendämmungen und Solaranlagen ist möglich.

Durch die Bündelung der Windkraft an wenigen Gebäudepunkten, kann die Anzahl der benötigten Rotoren und auch die Rotorfläche verringert werden. Die Kosten dieser Vorrichtungen insgesamt werden bei einer Massenproduktion bei einem Bruchteil der Herstell- und Errichtungskosten herkömmlicher Windräder liegen, hierzu einige Beispiele:
a) Wegfall von langwierigen Genehmigungsverfahren, Geländepacht, Fundamenikonstruktionen;
b) weit entfernte Trafostationen und lange Stromleitungen entfallen.
c) Wesentlich geringerer Zeitfaktor bis Fertigstellung, d. h. geringere Vorfinanzierung.
d) Verringerung der Wartungskosten mehrerer Rotoren
e) Anbringung der Kollektoren am Gebäude wodurch keine baulichen Veränderungen im Gebäude nötig sind.
f) Kombinierbarkeit der Anlage mit Modernisierungsmaßnahmen wie Gebäude Dämmung, Fassadenerneuerung, Dacheindeckung und Solarmodulen.

In der Praxis sind dem Erfinder noch keine vergleichbaren Anlagen bekannt. Dies liegt im Wesentlichen daran, dass bestehende Anlagen zur Nutzung von Windenergie an Gebäuden nur durch freistehende Rotoren an Gebäudekanten umgesetzt und kaum Fokus auf die Bündelung der Windströmungen am Gebäude selbst gelegt wird.

Eventuelle Gegenhaltungen
- Patentschrift DE 102 00 703 2843 A1
- Patentschrift DE 202 04 945 U1
- Patentschrift DE 10 2005 038 490 A1
- Patentschrift DE 10 2014 444 400 A1
- Patentschrift DE 10 2411115 582 A1
- Patentschrift AU 2013 313 164 B2

Die Patentschrift DE 102 00 703 2843 A1 enthält eine Nebenanspruch auf die generelle Verwendung von Dachabdeckungen in speziellen Formen als integrierte Anströmkanäle für den Walzen-Windgenerator.

Aus diesem Grund wird in dieser Patentanmeldung kein Patentanspruch auf Dachabdeckungen zur Anströmung eines Walzen-Windgenerators erhoben.

Die Patentschrift DE 202 04 945 U1 enthält eine Beschreibung einer Anlage zur Nutzung von Windkraft an Gebäuden. Sie beschreibt allerdings eine Anlage, welche die Luftströme durch ein Gebäude leitet. Die in dieser Patentschrift beschriebene Anlage geht im Gegensatz dazu davon aus, dass Luftströmungen an einem Gebäude durch Anbringung von Kollektoren an eine Gebäudekante geleitet und dort gebündelt zur Nutzung durch Rotoren und Generatoren zur Verfügung steht. Dies eröffnet die Möglichkeit eine Windkraftanlage mit bereits geplanten Fassaden und Dachflächen arbeiten zu kombinieren.

Die Patentschrift DE 10 2005 038 490 A1 enthält eine Beschreibung einer Anlage zur Gewinnung von Windenergie an Fassaden. Sie berücksichtigt allerdings nicht die Verwendung von Trichtern oder Segeln zur Bündelung der Windenergie. Außerdem wird in dieser Patentschrift nicht der Ausgleich des Luftdruckunterschiedes von windzugewandten und windabgewandten Gebäudefassaden berücksichtigt.

Die Patentschrift DE 10 2010 044 400 A1, enthält eine Beschreibung einer Anlage zur Gewinnung von Windenergie an Fassaden durch Wärmeeintrag. Sie berücksichtigt allerdings nicht die Verwendung von Trichtern oder Segeln zur Bündelung der einfallenden Windenergie. Außerdem wird in dieser Patentschrift nicht der Ausgleich des Luftdruckunterschiedes von windzugewandten und windabgewandten Gebäudefassaden berücksichtigt.

Die Patentschrift DE 10 2011 115 582 A1 enthält eine Beschreibung einer Anlage zur Gewinnung von Windenergie an Fassaden durch Wärmeeintrag. Sie berücksichtigt allerdings nicht die Verwendung von Trichtern oder Segeln zur Bündelung der einfallenden Windenergie. Außerdem wird in dieser Patentschrift nicht der Ausgleich des Luftdruckunterschiedes von windzugewandten und windabgewandten Gebäudefassaden berücksichtigt.

Die Patentschrift AU 2013 313 164 B2 enthält eine Beschreibung einer Anlage zur Nutzung von Windkraft an Gebäuden. Sie beschreibt allerdings eine Anlage, welche die Luftströme durch ein Gebäude leitet. Die in dieser Patentschrift beschriebene Anlage geht im Gegensatz dazu davon aus, dass Luftströmungen an einem Gebäude durch Anbringung von Kollektoren an eine Gebäudekante geleitet und dort gebündelt zur Nutzung durch Rotoren und Generatoren zur Verfügung steht. Die Kollektoren können modulartig aneinander gereiht werden. Dies eröffnet die Möglichkeit eine Windkraftanlage mit bereits geplanten Fassaden- und Dachflächenarbeiten an bestehenden Gebäuden zu kombinieren. Es können die Windströmungen an der gesamten Gebäudefläche von bereits bestehenden Gebäuden gebündelt werden. Es wird ein Luftdruckausgleich zwischen den windzugewandten und windabgewandten Gebäudeflächen über eine Luft führendes System möglich. Eine Konstruktion im Inneren eines Gebäudes, wie in der Gegenhaltung beschrieben, ist durch das hier beschrieben System nicht nötig. Die hier beschriebenen Trichter leiten die Luftströme an der Gebäudeaußenfläche weiter und können dort auch genutzt werden. Dadurch können Vibrationen, welche im inneren eines Gebäudes durch Windkraftanlagen entstehen an die Gebäude Außenflächen verlegt werden. Außerdem werden keine kalten/warmen Luftströmungen in das Gebäude geführt, was einen zusätzlichen Energiebedarf für ein Gebäude bedeuten würde.

### 1.1 Funktionsbeschreibung

Ein Windkollektor zeichnet sich durch zwei wesentliche Bauteile aus.
1. Ein oder mehrere luftsammelnde Trichter, welche jeweils den Wind aus einer oder mehreren Richtung sammeln.
2. Einen luftführenden Teil, welcher den von den Trichtern gesammelten Wind in einen Luftkanal leitet. Dieser Teil kann ein seitlicher oder unterhalb des Trichters montierter Luftkanal mit vorzugsweise rundem, ovalem oder rechteckigem Querschnitt sein.

Eine Windkollektor Platte ist dabei so konzipiert, dass der Luftkanal Öffnungen zur Aufnahme der Luftströmungen aus den Trichtern hat. Eine Windkollektoranlage, welche aus mehreren Windkollektoren bestehen kann, sammelt so den auf eine Fläche einfallenden Wind und leitet ihn in Luftkanälen zu Bündelungspunkten, an denen er zur Nutzung zur Verfügung steht. Verbindet man Windkollektoren an den windeinfallenden Flächen mit Windkollektoren an den im Windschatten liegenden Gebäudeflächen, wird ein Windruckausgleich über die verbindenden Luftkanäle angestoßen. An den windeinfallenden Flächen herrscht ein höherer Luftdruck und an den windabgewandten Flächen herrscht ein Unterdruck gegenüber dem allgemein herrschenden Luftdruck. Die hier beschriebene Windkraft Anlage kann den Luftdruck unterschied zwischen der Wind zugewandten Seit und windabgewandter Seite eines Gebäudes über die mit Luftkanälen verbundenen Trichter auf den Gebäudeflächen ausgleichen und zur Erzeugung von elektrischer oder mechanischer Energie nutzen.

Eine Windkollektoranlage, welche aus mehreren Windkollektorplatten und Luftkanälen besteht, benötig an den Bündelungspunkten, auf welche die Luftkanäle zulaufen, einen Sammelaufsatz an den Luftkanälen, welcher die Luftströmung aus den Luftkanälen auf die Rotoren einer Windkraftanlage leitet.

Ein größer dimensionierter Windkollektor kann auch aus einem an einer Gebäudekante angebrachten Segel als Trichter bestehen, welches den Wind sammelt und direkt an einen Bündelungspunkt, Rotor oder Luftkanal weiterleitet.

### 1.1.1 Funktionsbeschreibung Fassaden- und Dach-Windkollektor Platte

Eine Windkollektorplatte ist eine Kombination aus Trichter und Luftkanal. Der Trichter ist dabei fest mit einem Luftkanal verbunden. Eine Windkollektorplatte deckt dabei einen Teil einer Gebäudefläche ab, Zwei Kollektorplatten können per Steckverbindung miteinander verbunden werden, wobei die Luftkanäle miteinander verbunden werden. Die Luftströmung aus der ersten Windkollektorplatte wird dabei in den Luftkanal der zweiten Windkollektorplatte eingeleitet.

Vorzugsweise hat eine Fassaden-Windkollektorplatte zwei Trichter um Wind aus zwei Richtungen sammeln zu können. Eine Fassaden Windkollekterplatte benötigt daher einen Anschluss an zwei Luftkanälen um den Luftstrom in beide Richtungen leiten zu können. So kann der Wind in beide Richtungen an einer Fassadenfläche genutzt werden.

Eine Dach-Windkollektorplatte besteht auf einem Schrägdach nur aus einem Trichter, welcher den Wind in Richtung Dachfirst sammelt. Sie ist so aufgebaut, dass Sie die Wasserführende Funktion einer Dacheindeckung übernimmt und so eine Dacheindeckung mit einer Windkraftanlage kombiniert.

### 1.1.2 Funktionsbeschreibung Dachziegelaufsatz Windkollektor

Ein Dachziegelaufsatz Windkollektor zeichnet sich dadurch aus, dass er von den Abmaßen an eine oder mehrere Dachziegeln angepasst ist und so die Windströmungen oberhalb einer mit Ziegeln bedeckten Fläche sammelt. Der Dachziegelübernimmt dabei die Wasserführende Funktion und der Dachziegelaufsatz die windführende Funktion.

### 1.1.3 Funktionsbeschreibung Fassaden- und Dach- Windkollektor Segel

Ein Windkollektor Segel wird an einer Gebäudefläche oder Gebäudekante montiert und sammelt die auf der angrenzenden Gebäudefläche und eigenen Segelfläche einfallende Luftströmung und bündelt diese in einem Luftkanal oder einem Rotor zur direkten Erzeugung von elektrischer oder mechanischer Energie.

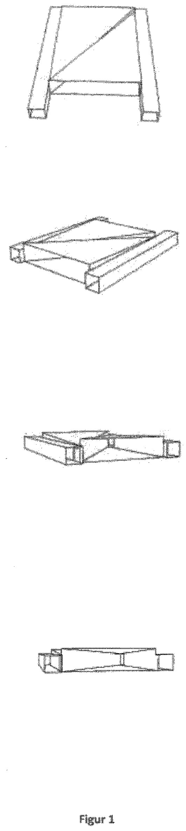

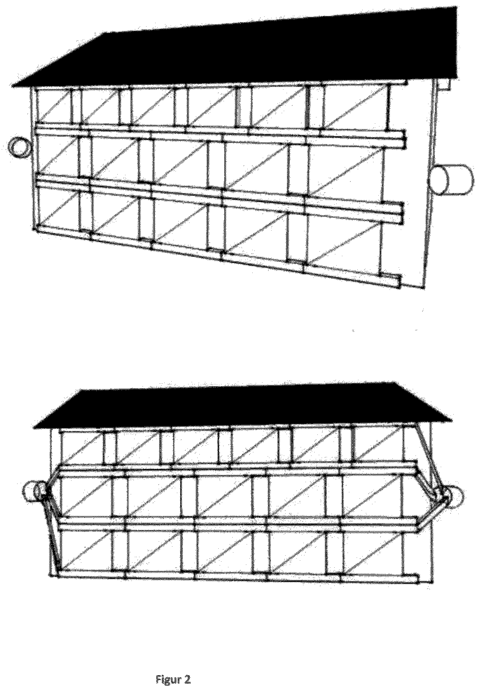

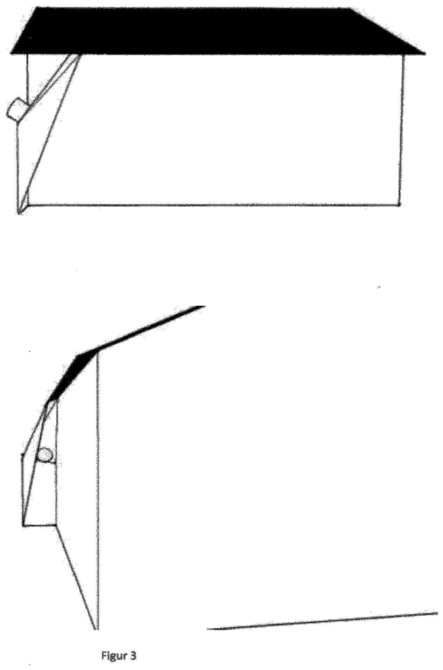

## Patentansprüche

**2.** 1 Patent Hauptanspruch
(1) Windkollektor-Anlage, die mehrere Windkollektorplatten zur Bündelung von Windkraft und Luftströmungen an Gebäudeflächen und freistehenden Konstruktionen wie Brücken, Masten, Türmen, Plakatwänden, Verkehrsschildern, Solarmodulen, Auf- und Überbauten an Gebäuden und Verkehrswegen und sonstigen Bauwerken zur Nutzung von Windenergie an Gebäudeflächen beinhaltet, wobei sich eine Windkollektorplatte durch zwei wesentliche Bauteile auszeichnet:
a. Ein oder mehrere Luft sammelnde Trichter, welche jeweils den Wind aus einer oder mehreren Richtungen an Gebäudeflächen sammeln.
b. Einen Luft führenden Teil, welcher den von den Trichtern gesammelten Wind in einen Luftkanal leitet, wobei
eine Windkollektor Platte dabei so konzipiert ist, dass der Luftkanal Öffnungen zur Aufnahme der Luftströmungen aus den Trichtern hat und auf die Gebäudeaußenfläche aufgesetzt wird, wobei die Windkollektor Platten modulartig aneinander gereiht verbaut werden, und so den auf die Gebäudefläche einfallenden Wind sammeln und in Luftkanälen weiterleiten, **dadurch gekennzeichnet dass** die Windkollektorplatten so verbunden sind, dass ein Ausgleich des Luftdruckunterschiedes zwischen einer windzugewandten und einer windabgewandten Gebäudeseite über den Luftkanal möglich ist.

**2.** 2 Patent Nebenansprüche
2.2.1 Fassaden Windkollektor Platten
(2) Windkollektorplatten nach Anspruch 1, **dadurch gekennzeichnet, dass** sie an Fassaden von Gebäuden und anderen Bauwerken genutzt werden.
2.2.2 Dach-Windkollektor Platten
(3) Windkollektoren nach Anspruch 1, **dadurch gekennzeichnet, dass** sie an Dachflächen genutzt werden und zusätzlich die wasserführende Funktion einer Dacheindeckung übernehmen. Es wird auf diese Weise eine Dacheindeckung mit einer Windkraftanlage kombiniert.
Mit Ausnahme zur Anströmung des Walzen-Windgenerators.
2.2.3 Dachziegelaufsatz Windkollektor
(4) Windkollektoren nach Anspruch 1, **dadurch gekennzeichnet, dass** der Dachziegelaufsatz Windkollektor von den Abmaßen an eine oder mehrere Dachziegeln angepasst ist und so die Windströmungen oberhalb einer mit Ziegeln bedeckten Fläche sammelt. Der Dachziegel übernimmt dabei die wasserführende Funktion und der Dachziegelaufsatz Windkollektor die windführende Funktion.
Mit Ausnahme zur Anströmung des Walzen-Windgenerators.
2.2.4 Windkollektor Segel
(5) Windkollektoren nach Anspruch 1, **dadurch gekennzeichnet, dass** die Windkollektorplatte ein Segel ist, welches an einer Gebäudefläche, Dachfläche oder Gebäudekante montiert ist und die auf der angrenzenden Gebäudefläche, Dachfläche und eigenen Siegelfläche einfallende Luftströmung bündelt.
Mit Ausnahme zur Anströmung des Walzen-Windgenerators an Dachflächen.
2.2.5 Fassadenverkleidung mit Windkollektor Platte
(6) Windkollektoren nach Anspruch 1, **dadurch gekennzeichnet, dass** die Windkollektorplatte mit einer Fassadenverkleidung kombiniert ist.
2.2.6 Fassadendämmung mit Windkollektor Platte
(7) Windkollektoren nach Anspruch 1, **dadurch gekennzeichnet, dass** die Windkollektorplatte mit einer Fassadendämmung kombiniert ist.
2.2.7 Solarmodul mit Windkollektor
(8) Windkollektoren nach Anspruch 1, **dadurch gekennzeichnet, dass** die Windkollektorplatte mit Solarmodulen kombiniert ist.
2.2.8 Fenster mit Windkollektor
(9) Windkollektoren nach Anspruch 1, **dadurch gekennzeichnet, dass** die Windkollektorplatte mit einem Fenster kombiniert ist. Die Windkollektorplatte besteht in diesem Fall aus einem transparenten Material.
